# EUROPÄISCHE PATENTANMELDUNG

(11) **EP 4 335 963 A1**
(43) Veröffentlichungstag der Anmeldung: **13.03.2024**
(21) Anmeldenummer: 23190503.5
(22) Anmeldetag: 09.08.2023
(51) Int. Cl.: E01B 3/46

(54) **SCHWELLENSOHLE**

(30) Priorität: 07.09.2022 AT 1742022
(71) Anmelder: Getzner Werkstoffe Holding GmbH, 6706 Bürs (AT)
(72) Erfinder: Augustin, Andreas, 6714 Nüziders (AT); Kopeinig, Stefan, 6850 Dornbirn (AT); Quirchmair, Martin, 4846 Redlham (AT); Loy, Harald, 6780 Schruns (AT)
(74) Vertreter: Torggler & Hofmann Patentanwälte - Rankweil

(57) **Zusammenfassung**

Schwellensohle (1) zur Befestigung an einer, einem Schotterbett (16) zugewandten Außenfläche (2), insbesondere einer Unterseite, einer Eisenbahnschwelle (3), wobei die Schwellensohle (1) eine Elastomerschicht (5) aufweist, wobei die Elastomerschicht (5) eine Dichte im Bereich von 250 kg/m³ bis 350 kg/m³, vorzugsweise von 250 kg/m³ bis 330 kg/m³, aufweist.

## Beschreibung

Die vorliegende Erfindung betrifft eine Schwellensohle zur Befestigung an einer, einem Schotterbett zugewandten Außenfläche, insbesondere einer Unterseite, einer Eisenbahnschwelle, wobei die Schwellensohle eine Elastomerschicht aufweist.

Die im Eisenbahnverkehr auf dem Schotter eines Schotterbetts aufliegenden Eisenbahnschwellen und -schienen unterliegen aufgrund der Jahreszeiten und wechselnden Wetterbedingungen thermischen Schwankungen. Diese führen speziell in der Eisenbahnschiene zu hohen Spannungen, welche sich schlagartig entladen können und in Form einer Gleisverwerfung zu einer Neupositionierung der jeweiligen Eisenbahnschwellen führen können. Ob und wann es zu solchen Gleisverwerfungen kommt, wird durch die diesen Verwerfungen entgegenwirkende Reibung und Verzahnung der Eisenbahnschwelle im Schotter bestimmt, wobei dieser Widerstand als Querverschiebewiderstand bezeichnet wird. Der Querverschiebewiderstand wird hauptsächlich durch die Interaktion zwischen der entsprechenden Außenseite, insbesondere Unterseite, der Eisenbahnschwelle und dem Schotter bestimmt.

Speziell bei einer Gleisneulage hat der Querverschiebewiderstand niedrige Werte, welche zu einem erhöhten Sicherheitsrisiko führen können. Die Stabilität der jeweiligen Eisenbahnschwelle im Schotter ist aufgrund der geringen Kontaktfläche zwischen der Unterseite der Eisenbahnschwelle und der obersten Lage des Schotters limitiert.

Es ist bereits Stand der Technik, durch die Aufbringung von sogenannten Schwellensohlen auf der dem Schotterbett zugewandten Außenfläche, insbesondere Unterseite, der Eisenbahnschwelle, den Querverschiebewiderstand zu erhöhen.

Schwellensohlen sind beim Stand der Technik in zahlreichen verschiedenen Ausgestaltungsformen bekannt. Als Beispiel für eine gattungsgemäße Schwellensohle kann z.B. auf die EP 2 697 430 B1 verwiesen werden. Die Schwellensohle weist meist eine Befestigungsschicht auf, die der Befestigung der Schwellensohle an der Außenfläche der Eisenbahnschwelle dient. Hierfür gibt es beim Stand der Technik bereits verschiedenste Lösungen, je nach Material der Eisenbahnschwelle. Darüber hinaus verfügt die Schwellensohle auch über eine Elastomerschicht, welche der Schwellensohle entsprechend elastische Eigenschaften verschafft.

Aufgabe der Erfindung ist es, eine Schwellensohle der oben genannten Art dahingehend zu verbessern, dass sie für auf einem Schotterbett gelagerte Eisenbahnschwellen einen besonders hohen Querverschiebewiderstand zur Verfügung stellen kann.

Zur Lösung dieser Aufgabe schlägt die Erfindung vor, dass die Elastomerschicht eine Dichte im Bereich von 250 kg/m³ bis 350 kg/m³, vorzugsweise von 250 kg/m³ bis 330 kg/m³, aufweist.

Es hat sich überraschenderweise gezeigt, dass eine Elastomerschicht der Schwellensohle mit einer Dichte im Bereich von 250 kg/m³ bis 350 kg/m³ und insbesondere von 250 kg/m³ bis 330 kg/m³ einen besonders hohen Querverschiebewiderstand der Eisenbahnschwelle auf einem Schotterbett ermöglicht.

Die Elastomerschicht kann grundsätzlich aus unterschiedlichen Elastomeren bestehen, wie z.B. Gummi oder anderen Arten von Kautschuk, Gummigranulaten, Werkstoffgemischen wie z.B. Granulatmaterialien verschiedener Grundwerkstoffe, usw.. Bei besonders bevorzugten Ausführungsbeispielen der Erfindung ist allerdings vorgesehen, dass die Elastomerschicht ein Polyurethan aufweist oder daraus besteht.

Erfindungsgemäße Schwellensohlen können bei Eisenbahnschwellen aus unterschiedlichem Material eingesetzt werden. Z.B. kann die Eisenbahnschwelle aus Beton, Metall, insbesondere Stahl, Holz oder aus einem entsprechend harten Kunststoff bestehen. Günstigerweise weist die Schwellensohle eine Befestigungsschicht zur Befestigung an der Eisenbahnschwelle auf. Die Art der Befestigungsschicht, mit der die Schwellensohle an der Außenfläche, insbesondere an der Unterseite, der Eisenbahnschwelle befestigt wird, kann an das Material, aus dem die Eisenbahnschwelle besteht, angepasst sein. Z.B. kann bei einer Eisenbahnschwelle aus Beton die Befestigungsschicht wie in der EP 2 697 430 B1 ein Abstandsgewirke oder in anderen Ausgestaltungsformen eine Wirrfaserschicht, ein Vlies, ein Faserflor aufweisen oder auch ganz anders ausgestaltet sein. Die Schwellensohle kann an der Eisenbahnschwelle auch angeklebt werden. Dann ist die Befestigungsschicht somit eine Klebeschicht. Hier können alle beim Stand der Technik an sich bekannten Arten von Befestigungsschichten zur Ausbildung von erfindungsgemäßen Schwellensohlen zum Einsatz kommen.

Um die Elastomerschicht mit einer ausreichenden Festigkeit auszugestalten, ist günstigerweise vorgesehen, dass die Elastomerschicht eine Reißfestigkeit von 2,2 N/mm² (Newton pro Quadratmillimeter) bis 4,0 N/mm², vorzugsweise von 2,2 N/mm² bis 2,8 N/mm², aufweist. Weiters ist es günstig, wenn die Elastomerschicht eine Reißdehnung von 50% bis 200%, vorzugsweise von 50% bis 75%, aufweist. Die Reißfestigkeit und auch die Reißdehnung können gemäß DIN EN ISO 527-1:2019-12 oder gemäß DIN EN ISO 527-3:2019-02 bestimmt werden. Bevorzugt wird hierbei ein Prüfkörper gemäß Type 5 dieser Norm mit einer Dicke von 5 mm verwendet. Die Reißfestigkeit und die Reißdehnung können in einem Prüfvorgang aber auch in getrennten Prüfvorgängen bestimmt werden.

Bei der Bestimmung eines Druckverformungsrestes gemäß DIN EN ISO 1856:2020-11 erzielen die Elastomerschichten der erfindungsgemäßen Schwellensohlen günstigerweise Werte von 15% bis 24%, vorzugsweise von 17% bis 24%. Bei der Bestimmung des Druckverformungsrests der Elastomerschicht gemäß dieser Norm wird günstigerweise das Verfahren C (Druckverformung unter speziell festgelegten Bedingungen) der Norm verwendet, bei welchem eine Lagerung bei einer Temperatur von 23+-2°C und einer relativen Luftfeuchte von 50+-5% für 72 Stunden und 25% Verformung des Prüfkörpers durchgeführt wird. Die Probengeometrie bei der Bestimmung des Druckverformungsrests in dieser Art liegt günstigerweise bei 25mm x 25mm x 12,5mm.

Im Sinne eines besonders guten Querverschiebewiderstands liegt die Shore-A-Härte der Elastomerschicht der Schwellensohle günstigerweise im Bereich von 50 bis 80, vorzugsweise von 70 bis 80, wobei diese Shore-A-Härte gemäß DIN ISO 7619-1:2012-02 bestimmt werden kann.

Um einen besonders guten Querverschiebewiderstand erzielen zu können, sollte die Elastomerschicht der Schwellensohle gewisse plastische Eigenschaften aufweisen, die es ermöglichen, dass der Schotter in die Schwellensohle bzw. in die Elastomerschicht eindringt und dort formschlüssig festgehalten wird. Andererseits sollte die Elastomerschicht der Schwellensohle aber auch eine gewisse Elastizität verleihen, damit die Schwellensohle bei der Überfahrt des Schienenfahrzeugs die erzeugten Erschütterungen möglichst gut dämpfen kann. Die für den Erschütterungsschutz benötigen hochelastischen Eigenschaften sind aber andererseits bezüglich der Optimierung der Gleisstabilität nicht ideal, da Schwellensohlen mit hoher Elastizität in der Regel keine oder nur sehr geringe Verzahnung des Schotters in der Schwellensohle zulassen. Die Stabilisierung des Schotters und in weiterer Folge die Erhöhung der Gleisstabilität ist nur bedingt möglich.

In diesem Sinne gibt es also einen möglichst guten Kompromiss zwischen plastischen und elastischen Eigenschaften der Schwellensohle zu erzielen. So soll die Schwellensohle einerseits aufgrund ihrer plastischen Eigenschaften den Schotter unter der Schwellensohle und damit unter der Eisenbahnschwelle möglichst gut festhalten und einen möglichst hohen Querverschiebewiderstand sicherstellen. Andererseits gilt es die Schwellensohle aber so elastisch auszubilden, dass sie ausreichend gute schwingungsdämpfende Eigenschaften aufweist. Zusammenfassend könnte man auch von guten elastoplastischen Eigenschaften sprechen.

Es hat sich überraschenderweise gezeigt, dass solche elastoplastischen Eigenschaften besonders gut sind, wenn die Schwellensohle bei Durchführung des nachfolgend geschilderten Restverformungstests eine relative Restverformung rv im Bereich von 50% bis 80%, vorzugsweise von 55% bis 70%, aufweist. Dieser Restverformungstest wurde in Anlehnung an die EN 16730:2016 (E), Kapitel 5.3.6 und den dort genannten "Fatique test of USB on a concrete block with GBP (Annex I)" entwickelt. Der Restverformungstest ist an der außen an einem Prüfkörperträger aus Beton befestigten Schwellensohle durchzuführen und besteht aus folgenden Testschritten:
a) Einlegen des Prüfkörperträgers aus Beton mit der daran befestigten Schwellensohle in eine Testapparatur, wobei die Testapparatur eine, an einem Druckstempel einer Druckpresse befestigte geometrische Prüfplatte aufweist, wobei die geometrische Prüfplatte eine Druckoberfläche mit Erhebungen und Vertiefungen aufweist und die geometrische Prüfplatte mit ihrer Druckoberfläche an eine von dem Prüfkörperträger abgewandte Oberfläche der Schwellensohle angelegt wird,
b) Messung der Ausgangsdicke d0 der Schwellensohle an einem Messort im Bereich einer maximalen Erhebung der geometrischen Prüfplatte,
c) Eindrücken der Prüfplatte mit ihrer Druckoberfläche in die Schwellensohle mittels des Druckstempels in fünfhunderttausend unmittelbar aufeinanderfolgenden Druckzyklen, wobei in jedem dieser Druckzyklen die Prüfplatte mit einem Druck mit einem sinusförmigen Verlauf zwischen 0,01 N/mm² und 0,15 N/mm² mit einer Zyklusfrequenz von 15 Hz in die Schwellensohle hineingedrückt wird,
d) Messung einer ersten geänderten Dicke d1 der Schwellensohle am Messort beim fünfhunderttausendsten Druckzyklus, wobei sich die Schwellensohle bei der Messung der ersten geänderten Dicke d1 im maximal während der fünfhunderttausendsten Druckzyklus entstehenden komprimierten Zustand befindet,
e) vollständiges Abheben der Prüfplatte von der Schwellensohle mit einer konstanten Abhebegeschwindigkeit von 1 mm/s beginnend unmittelbar im Anschluss an die Messung der ersten geänderten Dicke d1,
f) Messung einer zweiten geänderten Dicke d2 der Schwellensohle am Messort unmittelbar nach Ablauf einer Zeitspanne von 60 s, wobei die Zeitspanne unmittelbar am Ende der Messung der ersten geänderten Dicke d1 beginnt,
g) Berechnung der relativen Restverformung rv nach der Formel rv=(d0-d2)/(d0-d1).

Als Prüfkörperträger kann z.B. ein Betonprüfkörper mit den Maßen 250mm x 250mm x 100mm dienen. Als geometrische Prüfplatte kann z.B. eine GBP gemäß Annex 1 der EN 16730:2016(E) verwendet werden, welche auch als geometrische Schotterplatte bezeichnet werden kann. Die in Testschritt c) genannte Zyklusfrequenz von 15 Hz (Hertz) bedeutet eine Zyklusdauer, also zeitliche Länge eines Druckzyklus von einer Fünfzehntel Sekunde.

Weist die Schwellensohle bei der Durchführung des Restverformungstests Restverformungen rv in den genannten Bereichen auf, so wird hierdurch mittels der entsprechenden elastoplastischen Eigenschaften der Schwellensohle und insbesondere ihrer Elastomerschicht ein sehr hoher Querverschiebewiderstand für die Eisenbahnschwelle auf dem Schotterbett erreicht. Die plastischen Eigenschaften der Elastomerschicht erlauben eine tiefe Penetration des Schotters in die Schwellensohle bei annähernd gleichbleibend hoher quasi statischer Steifigkeit. Zusätzlich zeigen solche Schwellensohlen mit entsprechenden plastischen Eigenschaften eine überdurchschnittlich starke Verzahnung der obersten Lage des Schotters, da sich das Material der Elastomerschicht formschlüssig an die Oberfläche der Schotterkörner schmiegt. Es entsteht ein Formschluss zwischen der Schwellensohle und dem Schotter, welcher bis zum nächsten Stopfzyklus im Zuge von Wartungsarbeiten am Schotterbett bestehen bleibt und sich anschließend an entsprechende Stopfvorgänge aufs Neue ausbildet. Das Stopfen beschreibt dabei eine übliche Wartungstätigkeit bei der der Schotter wieder zurück unter die Eisenbahnschwelle befördert oder in anderen Worten gestopft wird. Diese Verzahnung kann z.B. beim Herausheben der Eisenbahnschwelle mit der Schwellensohle aus dem Schotter an den in der Unterseite der Schwellensohle noch steckenden Schotterkörnern beobachtet werden. Die Konsequenz ist eine signifikante Erhöhung des Querverschiebewiderstands im Vergleich zu rein elastischen Schwellensohlen. Insgesamt wird hierdurch eine überdurchschnittlich hohe Verbesserung der Gleislagestabilität bewirkt.

Damit die Schwellensohle mittels ihrer Elastomerschicht die gewünschten Eigenschaften erreicht, kann z.B. vorgesehen sein, bei der Herstellung der Elastomerschicht, insbesondere aus Polyurethan oder einem Kautschukelastomer, höher funktionelle, vorzugsweise mindestens trifunktionelle, langkettige Polymere mit mindestens difunktionellen Isocyanaten umzusetzen. Zur Erzielung der gewünschten Steifigkeiten können zudem durch Umsetzung von kurzkettigen bifunktionalen Reaktionspartnern, wie z.B. Diolen oder Diaminen, mit Diisocyanaten zusätzlich Hartphasen in der Elastomerschicht erzeugt werden. Es kann sich um segmentierte Polyurethanelastomere, also Produkte aus einer weitmaschig vernetzten elastischen Weichphase und einer steifen Hartphase, handeln. Als bevorzugte Reaktionspartner kommen dabei Glykole mit endständigen OH-Gruppen wie z.B. Butandiol-1.4 oder Ethandiol-1.2 bzw. entsprechende Diamine zum Einsatz. Der Aufbau der Weichphase und der Hartphase kann durch die Verwendung sterisch gehinderter kurzkettiger Reaktionspartner wie z.B. von Glykolen gezielt gestört werden. Durch Verwendung von beispielsweise Butandiol-2.3 werden die reaktiven OH-Gruppen durch die benachbarten Kohlenwasserstoffreste abgeschirmt und durch die Umsetzung mit dem Diisocyanat wird dieser Effekt noch verstärkt. Überraschenderweise wurde festgestellt, dass durch die Behinderung der freien Drehbarkeit der CC-Bindungen, an denen die reaktiven OH- Gruppen gebunden sind, das Dämpfungsverhalten extrem stark beeinflusst werden kann, z.B. durch Störung der Phasenseparation. Durch Ersatz von 20% bis 100% des standardmäßig verwendeten Kettenverlängerers, wie beispielsweise Butandiol-1.4 durch das beispielsweise dargestellte Butandiol-2.3 kann das Dämpfungsverhalten zur Erreichung der gewünschten elastoplastischen Eigenschaften eingestellt werden. Alternativ werden durch den Einsatz von Diaminen, welche strukturell den Diolen ähnlich sind, bevorzugt Polyharnstoffgruppierungen generiert. Durch entsprechende Reaktionssteuerung über Katalysatoren kann z.B. auch für den Schäumprozess eines entsprechend geschäumten Elastomers verwendetes Wasser zur Bildung von aromatischen Aminen verstärkt umgesetzt werden, sodass die aliphatischen Hartphasenbereiche durch aromatische Strukturen ergänzt werden, was neben einer Steifigkeitserhöhung erstaunlicherweise auch die Dämpfungseigenschaften zu höheren Werten verschieben kann und somit den gewünschten elastoplastischen Effekt dahingehend beeinflusst, dass die gewünschte Einbettung des Schotters erhöht und gleichzeitig der Querveschiebewiderstand merklich verbessert wird. Durch diesen Umstand wird die Eisenbahnschwelle und damit das Gleis im Schotterbett zusätzlich stabilisiert.

Weitere Merkmale und Eigenschaften bevorzugter Ausgestaltungsformen der Erfindung werden nachfolgend exemplarisch in der Figurenbeschreibung erläutert. Es zeigen:
- Fig. 1: eine erfindungsgemäße Eisenbahnschwelle mit einer Schwellensohle, welche auf einem Schotterbett gelagert ist, in einer Längsansicht;
- Fig. 2: den Aufbau aus Fig. 1 in einer stirnseitigen Ansicht;
- Fig. 3: das Detail im Bereich A aus Fig. 2 vergrößert;
- Fig. 4: eine Darstellung einer zur Durchführung des Restverformungstests geeigneten Testapparatur und
- Fig.5 bis 12: weitere Darstellungen zur Erläuterung der einzelnen Testschritte des Restverformungstests.

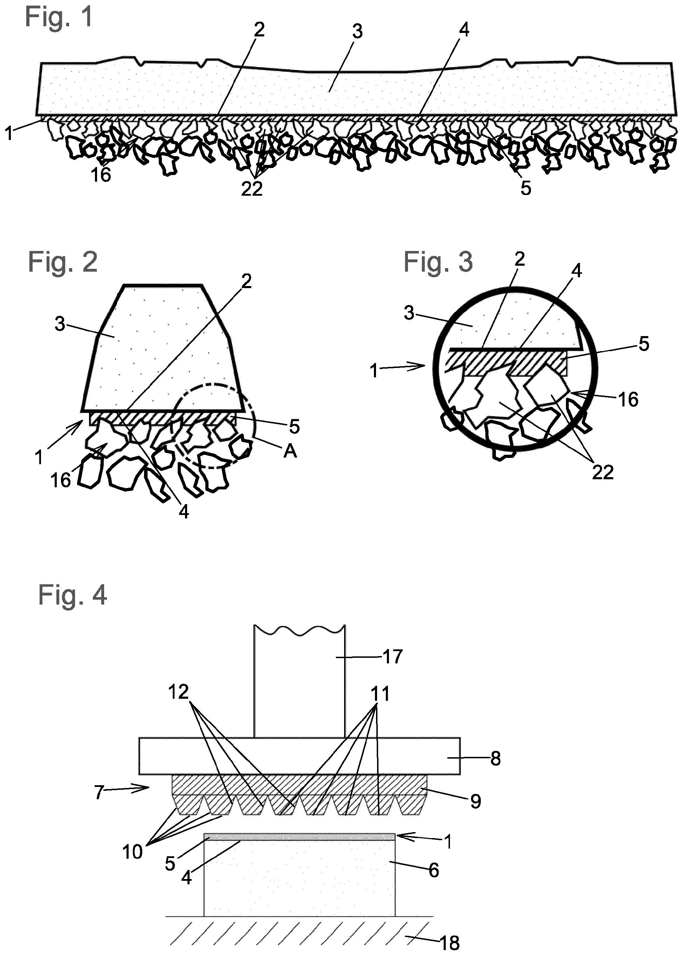

Fig. 1 zeigt schematisiert eine Längsansicht auf eine Eisenbahnschwelle 3, welche unter Zwischenschaltung einer erfindungsgemäßen Schwellensohle 1 auf einem Schotterbett 16, welches aus dem Schotter 22 gebildet wird, aufliegt. Die Schwellensohle 1 befindet sich an der dem Schotterbett 16 zugewandten Außenfläche 2, also hier der Unterseite der Eisenbahnschwelle 3, und ist mit ihrer Befestigungsschicht 4 an der Eisenbahnschwelle 3 befestigt. Zusätzlich zur Befestigungsschicht 4 weist die Schwellensohle 1 die Elastomerschicht 5 auf. Darüber hinaus kann die Schwellensohle 1 noch in an sich bekannter Art und Weise weitere Schichten aufweisen, die hier nicht näher erläutert werden müssen.

Fig. 2 zeigt eine stirnseitige Ansicht auf die Anordnung aus Fig. 1. In dem in Fig. 3 vergrößert dargestellten Bereich A aus Fig. 2 sieht man besonders gut, wie der Schotter 22 des Schotterbetts 16 bereichsweise in die Elastomerschicht 5 und damit in die Schwellensohle 1 eindringt, um so den Querverschiebewiderstand zu erhöhen, also um so möglichst zu verhindern, dass die Eisenbahnschwelle 3 durch entsprechende Spannungen im Gleissystem in ihrer Längsrichtung gegen das Schotterbett 16 verschoben wird.

Fig. 4 zeigt schematisiert eine Testapparatur 7 zur Durchführung des Restverformungstests zur Bestimmung der relativen Restverformung rv der Schwellensohle 1. Die Testapparatur 7 weist eine entsprechend stabile und feste Basis 18 und einen Druckstempel 8 auf. Am Druckstempel 8 ist die Prüfplatte 9 befestigt. Diese weist eine Druckoberfläche 10 mit Erhebungen 11 und Vertiefungen 12 auf. Der Druckstempel 8 ist an einer hier nur stark schematisiert dargestellten, aber an sich bekannten Presse 17 befestigt, welche es erlaubt, den Druckstempel 8 samt Prüfplatte 9 in die Schwellensohle 1 hineinzudrücken und aus dieser wieder herauszuheben. Bei der Presse 17 kann es sich z.B. um eine hydraulische Presse, aber auch um andere an sich bekannte, für diese Anwendung geeignete Pressen handeln. In Fig. 4 ist in diese Testapparatur 7 bereits ein Prüfkörperträger 6 aus Beton mit der daran befestigten Schwellensohle 1 eingelegt, wobei die Prüfplatte 9 in ihrer Druckoberfläche 10 an einer von dem Prüfkörperträger 6 abgewandte Oberfläche der Schwellensohle 1 angelegt werden kann.

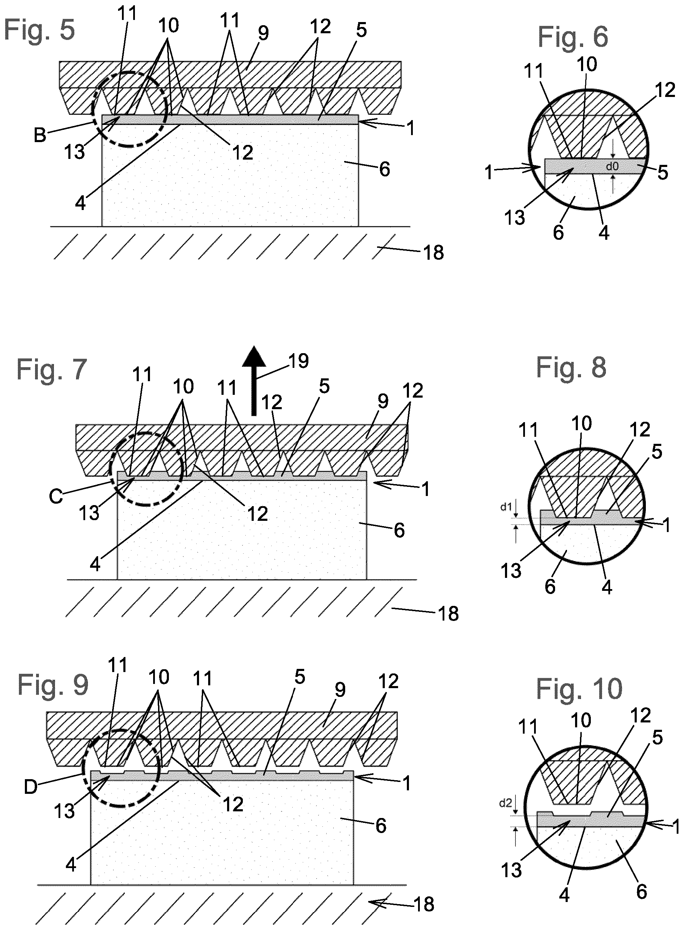

In den folgend beschriebenen Fig. 5 bis 10 sind der Druckstempel 8 und die Presse 17 nicht mehr dargestellt, aber natürlich trotzdem vorhanden.

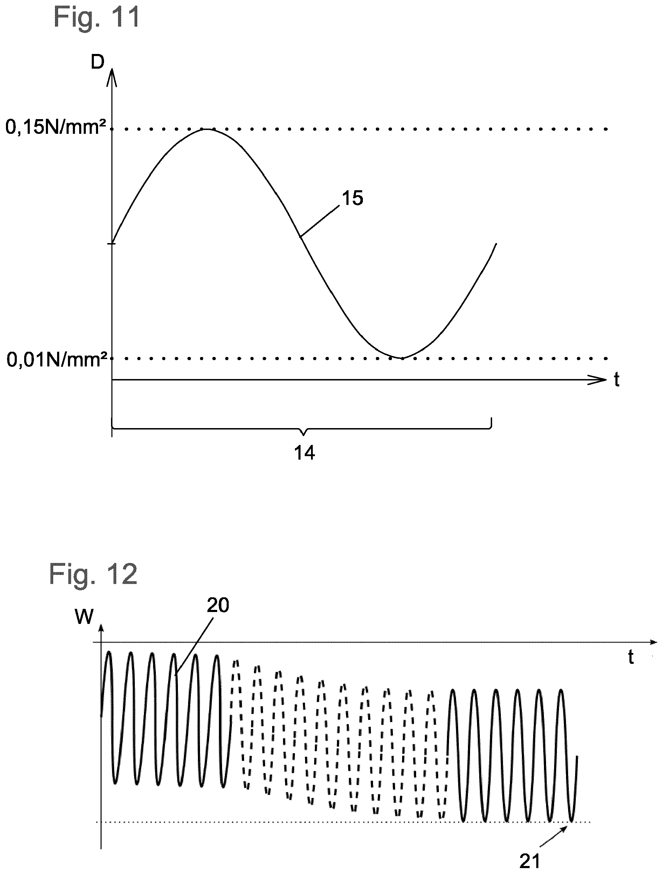

Fig. 5 zeigt die Situation, bei der die Prüfplatte 9 mit ihrer Druckoberfläche 10 mit den Erhebungen 11 und den Vertiefungen 12 an die vom Prüfkörperträger 6 abgewandte Oberfläche der Schwellensohle 1 angelegt ist. In Fig. 5 und insbesondere in dem in Fig. 6 gezeigten Detail B aus Fig. 5 ist zu sehen, dass sich die Schwellensohle 1 hier noch in der Ausgangsdicke d0 findet, welche am Messort 13 im Bereich einer maximalen Erhebung 11 der geometrischen Platte 9 gemessen wird. Anschließend an die Messung dieser Ausgangsdicke d0 gemäß den Fig. 5 und 6 wird nun bei der Durchführung des Restverformungstests die Prüfplatte 9 mit ihrer Druckoberfläche 10 in die Schwellensohle 1 mittels des Druckstempels 8 in fünfhunderttausend unmittelbar aufeinander folgenden Druckzyklen 14 eingedrückt, wobei in jedem dieser Druckzyklen 14 die Prüfplatte 9 mit einem Druck 15 mit einem sinusförmigen Verlauf zwischen 0,01 N/mm² und 0,15 N/mm² mit einer Zyklusfrequenz von 15 Hz in die Schwellensohle 1 hineingedrückt wird. Fig. 11 zeigt einen solchen Druckzyklus 14. Dargestellt ist der Verlauf des Drucks 15 in diesem Druckzyklus 14 in einem Diagramm, bei dem der Druck D gegen die Zeit t aufgetragen ist. Aufgrund der Zyklusfrequenz von 15 Hz beträgt die Dauer des Zyklus eine fünfzehntel Sekunde. In Fig. 11 ist gut der sinusförmige Verlauf des Drucks 15 zwischen 0,01 N/mm² und 0,15 N/mm² zu sehen. Im Zuge des Restverformungstests werden fünfhunderttausend solcher unmittelbar aufeinander folgender Druckzyklen 14 durchgeführt.

Fig. 12 zeigt in einem Diagramm, welches den entlang der Achse W aufgetragenen Weg 20 des Druckstempels 8 bzw. der Prüfplatte 9 gegen die Zeit t darstellt, wie im Laufe der Durchführung der Druckzyklen 14 die Prüfplatte 9 mit ihrer Druckoberfläche 10 am Messort 13 immer tiefer in die Schwellensohle 1 eindringt. Hierbei sind in Fig. 12 natürlich nicht alle fünfhunderttausend Druckzyklen 14 dargestellt, was durch die in der Mitte gestrichelt dargestellten Zyklen symbolisiert wird. Am Ende dieser fünfhunderttausend Druckzyklen wird jedenfalls der in Fig. 12 symbolisch dargestellte Zustand 21 erreicht, bei dem die geänderte Dicke d1 der Schwellensohle 1 am Messort 13 bestimmt wird. Die Messung der ersten geänderten Dicke d1 wird also im maximal während des fünfhunderttausendsten Druckzyklus 14 entstehenden komprimierten Zustand 21 bestimmt. Fig. 7 zeigt diesen Zustand 21, bei dem die Druckoberfläche 10 mit der Erhebung 11 der Prüfplatte 9 so weit in die Schwellensohle 1 hineingedrückt ist, dass diese am Messort 13 nur noch die Dicke d1 aufweist. Fig. 8 zeigt vergrößert den Bereich C aus Fig. 7 und damit auch die Dicke d1 der Schwellensohle 1 am Messort 13 zu diesem Zeitpunkt.

Unmittelbar im Anschluss an die Messung der ersten geänderten Dicke d1 erfolgt ein vollständiges Abheben der Prüfplatte 9 von der Schwellensohle 1 mit einer konstanten Abhebegeschwindigkeit von 1 mm/s. Der Pfeil 19 in Fig. 7 veranschaulicht die Richtung, in der die Prüfplatte 9 mittels des Druckstempels 8 und der Presse 17 bei diesem Entlastungsvorgang von der Schwellensohle 1 abgehoben wird, sodass der in Fig. 9 dargestellte Zustand erreicht werden kann. In Fig. 9 ist schematisch dargestellt, dass die Schwellensohle 1 im Anschluss an die fünfhunderttausend Druckzyklen 14 eine entsprechende Restverformung aufweist, welche mit der Zeit nach und nach rückgestellt wird. Unmittelbar nach Ablauf einer Zeitspanne von 60 Sekunden wird die in Fig. 10 und im Detail D aus Fig. 9 vergrößert dargestellte zweite geänderte Dicke d2 der Schwellensohle 1 am Messort 13 gemessen. Diese Zeitspanne von 60 Sekunden beginnt unmittelbar am Ende der Messung der ersten geänderten Dicke d1.

Aus den im Zuge des Restverformungstests in der geschilderten Art und Weise gemessenen Dicken d0, d1 und d2 kann dann die relative Restverformung rv mit der im Testschritt g) angegebenen Formel berechnet werden.

### Legende zu den Hinweisziffern:

- 1: Schwellensohle
- 2: Außenfläche
- 3: Eisenbahnschwelle
- 4: Befestigungsschicht
- 5: Elastomerschicht
- 6: Prüfkörperträger
- 7: Testapparatur
- 8: Druckstempel
- 9: Prüfplatte
- 10: Druckoberfläche
- 11: Erhebung
- 12: Vertiefung
- 13: Messort
- 14: Druckzyklus
- 15: Druck
- 16: Schotterbett
- 17: Presse
- 18: Basis
- 19: Richtung
- 20: Weg
- 21: Zustand
- 22: Schotter

## Patentansprüche

1. Schwellensohle (1) zur Befestigung an einer, einem Schotterbett (16) zugewandten Außenfläche (2), insbesondere einer Unterseite, einer Eisenbahnschwelle (3), wobei die Schwellensohle (1) eine Elastomerschicht (5) aufweist, **dadurch gekennzeichnet, dass** die Elastomerschicht (5) eine Dichte im Bereich von 250 kg/m³ bis 350 kg/m³, vorzugsweise von 250 kg/m³ bis 330 kg/m³, aufweist.

2. Schwellensohle (1) nach Anspruch 1, **dadurch gekennzeichnet, dass** die Elastomerschicht (5) ein Polyurethan aufweist oder daraus besteht, und/oder dass die Schwellensohle (1) eine Befestigungsschicht (4) zur Befestigung an der Eisenbahnschwelle (3) aufweist.

3. Schwellensohle (1) nach Anspruch 1 oder 2, **dadurch gekennzeichnet, dass** die Elastomerschicht (5) eine Reißfestigkeit von 2,2 N/mm² bis 4,0 N/mm², vorzugsweise von 2,2 N/mm² bis 2,8 N/mm², aufweist.

4. Schwellensohle (1) nach einem der Ansprüche 1 bis 3, **dadurch gekennzeichnet, dass** die Elastomerschicht (5) eine Reißdehnung von 50% bis 200%, vorzugsweise von 50% bis 75%, aufweist.

5. Schwellensohle (1) nach einem der Ansprüche 1 bis 4, **dadurch gekennzeichnet, dass** die Elastomerschicht (5) einen Druckverformungsrest von 15% bis 24%, vorzugsweise von 17% bis 24%, aufweist.

6. Schwellensohle (1) nach einem der Ansprüche 1 bis 5, **dadurch gekennzeichnet, dass** die Elastomerschicht (5) eine Shore-A-Härte von 50 bis 80, vorzugsweise von 70 bis 80, aufweist.

7. Schwellensohle (1) nach einem der Ansprüche 1 bis 6, **dadurch gekennzeichnet, dass** die Schwellensohle (1) bei Durchführung eines Restverformungstests eine relative Restverformung rv im Bereich von 50% bis 80%, vorzugsweise von 55% bis 70%, aufweist, wobei der Restverformungstest an der, außen an einem Prüfkörperträger (6) aus Beton befestigten Schwellensohle (1) durchzuführen ist und aus folgenden Testschritten besteht:
a) Einlegen des Prüfkörperträgers (6) aus Beton mit der daran befestigten Schwellensohle (1) in eine Testapparatur (7), wobei die Testapparatur (7) eine, an einem Druckstempel (8) einer Druckpresse befestigte geometrische Prüfplatte (9) aufweist, wobei die geometrische Prüfplatte (9) eine Druckoberfläche (10) mit Erhebungen (11) und Vertiefungen (12) aufweist und die geometrische Prüfplatte (9) mit ihrer Druckoberfläche (10) an eine von dem Prüfkörperträger (6) abgewandte Oberfläche der Schwellensohle (1) angelegt wird,
b) Messung der Ausgangsdicke d0 der Schwellensohle (1) an einem Messort (13) im Bereich einer maximalen Erhebung (11) der geometrischen Prüfplatte (9),
c) Eindrücken der Prüfplatte (9) mit ihrer Druckoberfläche (10) in die Schwellensohle (1) mittels des Druckstempels (8) in fünfhunderttausend unmittelbar aufeinanderfolgenden Druckzyklen (14), wobei in jedem dieser Druckzyklen (14) die Prüfplatte (9) mit einem Druck (15) mit einem sinusförmigen Verlauf zwischen 0,01 N/mm² und 0,15 N/mm² mit einer Zyklusfrequenz von 15 Hz in die Schwellensohle (1) hineingedrückt wird,
d) Messung einer ersten geänderten Dicke d1 der Schwellensohle (1) am Messort (13) beim fünfhunderttausendsten Druckzyklus (14), wobei sich die Schwellensohle (1) bei der Messung der ersten geänderten Dicke d1 im maximal während des fünfhunderttausendsten Druckzyklus (14) entstehenden komprimierten Zustand (21) befindet,
e) vollständiges Abheben der Prüfplatte (9) von der Schwellensohle (1) mit einer konstanten Abhebegeschwindigkeit von 1 mm/s beginnend unmittelbar im Anschluss an die Messung der ersten geänderten Dicke d1,
f) Messung einer zweiten geänderten Dicke d2 der Schwellensohle (1) am Messort (13) unmittelbar nach Ablauf einer Zeitspanne von 60 s, wobei die Zeitspanne unmittelbar am Ende der Messung der ersten geänderten Dicke d1 beginnt,
g) Berechnung der relativen Restverformung rv nach der Formel rv=(d0-d2)/(d0-d1).
